# FASCICULE DE BREVET EUROPEEN

(11) **EP 0 538 149 B1**
(45) Date de publication et mention de la délivrance du brevet: **12.02.1997**
(21) Numéro de dépôt: 92420322.7
(22) Date de dépôt: 22.09.1992
(51) Int. Cl.: H01H 71/02, H01H 71/10

(54) **Gamme de disjoncteurs basse tension à boitier moulé**
Baureihe von Niederspannungsschaltern mit Formstoffgehäusen
Series of moulded case low voltage circuit breakers

(30) Priorité: 15.10.1991 FR 9112792
(43) Date de publication de la demande: 21.04.1993
(73) Titulaire: SCHNEIDER ELECTRIC SA, 92100 Boulogne Billancourt (FR)
(72) Inventeur: Perrier, Philippe, F-38050 Grenoble Cedex 9 (FR); Nereau, Jean-Pierre, F-38050 Grenoble Cedex 9 (FR); Morel, Robert, F-38050 Grenoble Cedex 9 (FR); Nebon, Jean-Pierre, F-38050 Grenoble Cedex 9 (FR)
(74) Mandataire: Hecké, Gérard

(56) Documents cités:
- EP-A- 0 174 904
- EP-A- 0 208 613
- DE-U- 7 044 973
- FR-A- 2 285 707
- US-A- 2 967 917
- US-A- 3 631 369

## Description

L'invention est relative à un disjoncteur basse tension à double enveloppe et à plusieurs pôles, réalisé à partir de blocs unipolaires standards de coupure logés dans un boîtier moulé commun et dans lequel chaque bloc unipolaire comprend une boîte parallélépipèdique isolante ayant deux grandes faces latérales parallèles opposées et deux petites faces parallèles opposées et contenant un contact mobile, monté à pivotement sur un axe perpendiculaire auxdites grandes faces, et susceptible de coopérer avec un contact fixe, adjacent à une petite face, laquelle porte une borne reliée au contact fixe associé, plusieurs blocs unipolaires étant disposés parallèlement dans le boîtier selon leurs grandes faces latérales, ledit contact mobile étant agencé en pont de contacts coopérant avec deux contacts fixes, chacun respectivement adjacent à l'une desdites petites faces, pour engendrer une double coupure dans deux chambres de coupure du bloc unipolaire, un mécanisme à manette de commande étant commun à l'ensemble des blocs unipolaires.

Dans le document EP-A-174904 concernant un tel disjoncteur multipolaire, la largeur du boîtier n'est pas un multiple de celle d'un bloc unipolaire et la modularité ne peut être respectée si le nombre de pôles varie.

Selon le type d'installation électrique, les disjoncteurs de protection sont unipolaires ou multipolaires, par exemple à deux, trois ou quatre pôles, et pour un calibre donné, le constructeur offre une gamme de disjoncteurs à boîtier moulé. Certains éléments ou pièces de ces disjoncteurs, notamment les pièces de contacts et les chambres de coupure, sont communs aux différents pôles, mais cette standardisation, indispensable pour un abaissement du coût de fabrication, est peu poussée. Dans les systèmes modulaires, bien connus des spécialistes, les disjoncteurs multipolaires sont réalisés par assemblage de disjoncteurs unipolaires, mais ces systèmes ne tiennent pas compte de la possibilité d'utiliser certaines pièces, notamment le mécanisme de commande, pour l'actionnement de l'ensemble des pôles du disjoncteur. Il est d'autre part difficile de réaliser des assemblages entre les disjoncteurs unipolaires suffisamment solides et esthétiques.

Il a déjà été proposé de réaliser des disjoncteurs par assemblage de blocs unipolaires, logés dans des boîtiers de tailles différentes, pour recevoir, soit un, soit plusieurs pôles dans le cas d'un disjoncteur multipolaire.

Ces disjoncteurs ne respectent pas la modularité, en ce sens que la largeur d'un disjoncteur multipolaire n'est pas un multiple de celle du disjoncteur unipolaire. Le pas d'écartement des bornes est également différent entre un disjoncteur multipolaire, et entre des disjoncteurs unipolaires accolés les uns aux autres. Cette différence de pas empêche une alimentation par des barres de distribution, munies de dérivations régulièrement espacées.

La présente invention a pour but de réaliser une gamme de disjoncteurs ayant une modularité de raccordement, tout en étant réalisée à partir de blocs unipolaires logés dans un boîtier commun aux différents pôles.

Le disjoncteur selon l'invention est caractérisé en ce que les blocs unipolaires sont espacés d'un intervalle double de l'épaisseur de la paroi du boîtier, que les deux blocs d'extrémité sont accolés aux parois du boîtier par leurs grandes faces latérales d'extrémité, de façon à conserver la modularité définie par le disjoncteur unipolaire, et que les blocs unipolaires sont solidarisés les uns aux autres avec interposition d'entretoises ou de cales d'écartement qui définissent ledit intervalle entre les blocs adjacents.

Les contacts et les chambres de coupure associées sont contenus dans une boîte ou ampoule constituant un sous-ensemble, permettant la réalisation de disjoncteurs multipolaires selon l'invention par le logement de plusieurs blocs unipolaires à l'intérieur d'un boîtier de largeur appropriée. En ménageant un intervalle entre les blocs unipolaires d'un disjoncteur multipolaire, il est possible de respecter le pas de raccordement et de conserver une modularité de la largeur de tous les appareils de la gamme.Cet intervalle de faible épaisseur, par exemple d'environ 5mm est mis à contribution pour le passage de fileries, ou de tringles de commande, ou de transmission de mouvements, entre la partie arrière du disjoncteur et la partie avant. L'emploi d'un pont de contacts associé à deux chambres de coupure, disposées de part et d'autre de ce pont, donne au bloc unipolaire une certaine symétrie et une forme externe parallélépipèdique droite à encombrement réduit. La boîte ou ampoule unipolaire confine les éléments de coupure, et isole chaque pôle des pôles adjacents, en constituant des cloisons isolantes de séparation des pôles les uns par rapport aux autres. Le boîtier externe contenant les différents blocs unipolaires constitue une isolation additionnelle.

Les intervalles de séparation des blocs unipolaires, sont avantageusement matérialisés par des plaques formant lesdites entretoises ou cales d'écartement, ces plaques étant munies de passages ou conduits adaptés au logement des fils de connexion ou tringles de commande s'étendant au travers de cet intervalle. Les entretoises peuvent participer à la liaison entre les blocs unipolaires, et à cet effet comporter des pions de centrage coopérant avec les parois des blocs unipolaires adjacents.

Selon un développement important de l'invention, une entretoise incorpore un actionneur réagissant à une surpression régnant dans le ou les blocs unipolaires, pour transmettre au mécanisme de commande un ordre de déclenchement lorsque la pression dépasse un seuil prédéterminé. Les disjoncteurs limiteurs sont équipés de contacts à ouverture rapide par répulsion électrodynamique lors d'un court-circuit et cette rapidité d'ouverture engendre une limitation du courant. L'ouverture rapide des contacts crée une augmentation rapide de la pression, due à l'action de l'arc tiré sur les contacts, et cette augmentation est utilisée pour actionner le mécanisme d'ouverture du disjoncteur. La demande de brevet français n° 2661776 décrit un déclencheur à surpression de ce type et on se reportera avantageusement à cette demande pour de plus amples détails, notammment sur les avantages de sélectivité de déclenchement.

Selon l'invention, chaque pôle est logé dans une boîte, dont le volume est réduit, ce qui favorise une augmentation rapide de la pression et l'intervention de l'actionneur à surpression associé à la boîte. En logeant l'actionneur dans l'entretoise, la communication avec les blocs unipolaires adjacents peut être obtenue par de simples orifices ménagés dans les blocs en regard d'une cavité de l'entretoise recevant un détecteur de pression. La cavité peut être agencée en cylindre qui coopère avec un piston portant un levier de commande de déclenchement. Un actionneur à surpression peut être commun aux deux blocs unipolaires adjacents ou à l'ensemble des blocs unipolaires auquel cas des conduits, avantageusement ménagés ou constitués par des rivets creux d'assemblage, créent des communications entre les différents blocs et l'actionneur.

Les entretoises peuvent servir de fixation des blocs unipolaires au boîtier, par exemple par des simples vis traversant le fond du boîtier.

Tous les blocs unipolaires constituant le disjoncteur peuvent être solidarisés par tout moyen approprié, par exemple par des tiges filetées, ou être simplement maintenus par insertion dans le boîtier du disjoncteur. Le mécanisme de commande du type standard à manette de commande et à genouillère est commun à l'ensemble des pôles et est avantageusement associé au bloc unipolaire central du disjoncteur. Ce mécanisme est accouplé au pont de contacts de ce bloc unipolaire central, et le mouvement est transmis aux autres blocs unipolaires par tout moyen opérant, notamment par des liaisons mécanique, au moyen de tiges de transmission,ou au moyen d'encliquetage,ou d'emboîtement de parties conjuguées d'arbre de support des ponts de contacts. Le mécanisme de commande est encadré latéralement d'une manière bien connue en soi, par deux flasques métalliques, dont l'écartement correspond sensiblement à la largeur d'un bloc unipolaire, et ces flasques sont rigidement solidarisés au bloc unipolaire associé.

La modularité en largeur des boîtiers, est par exemple de 35mm, c'est à dire que la largeur des boîtiers des différents disjoncteurs de la gamme est un multiple de 35mm, cette modularité étant conservée au niveau des bornes de raccordement qui sont disposées au pas de 35mm. Cette largeur est adaptée au calibre des disjoncteurs.

L'invention porte bien entendu également sur les disjoncteurs appartenant à cette gamme.

D'autres avantages et caractéristiques ressortiront plus clairement de la description qui va suivre, d'un mode de mise en oeuvre plus particulièrement décrit, et représenté aux dessins annexés dans lesquels:

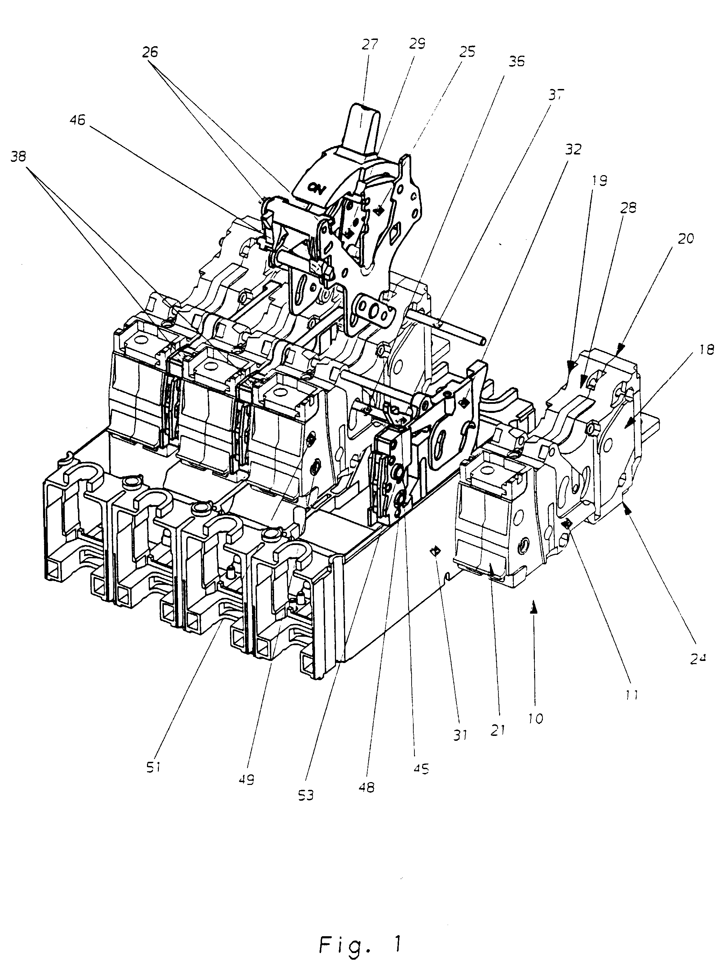

La figure 1 est une vue schématique éclatée en perspective d'un disjoncteur quadripolaire selon l'invention.

La figure 2 est une vue schématique en plan d'un disjoncteur unipolaire de la gamme de disjoncteurs selon la figure 1. Un tel disjoncteur unipolaire n'est pas couvert par les revendications.

La figure 3 est une vue analogue à celle de la figure 2, d'un disjoncteur tripolaire, un quatrième pôle étant représenté en traits discontinus.

La figure 4 est une vue en perspective à échelle agrandie d'une entretoise selon la figure 1, à détecteur de surpression.

La figure 5 est une vue analogue à celle de la figure 4, montrant la face opposée de l'entretoise.

La figure 6 est une vue schématique en coupe axiale d'un bloc unipolaire associé à un mécanisme de commande d'un disjoncteur selon l'invention.

La figure 7 est une vue en coupe de l'entretoise selon la figure 5.

La figure 8 illustre les communications entre les blocs unipolaires et le détecteur de surpression.

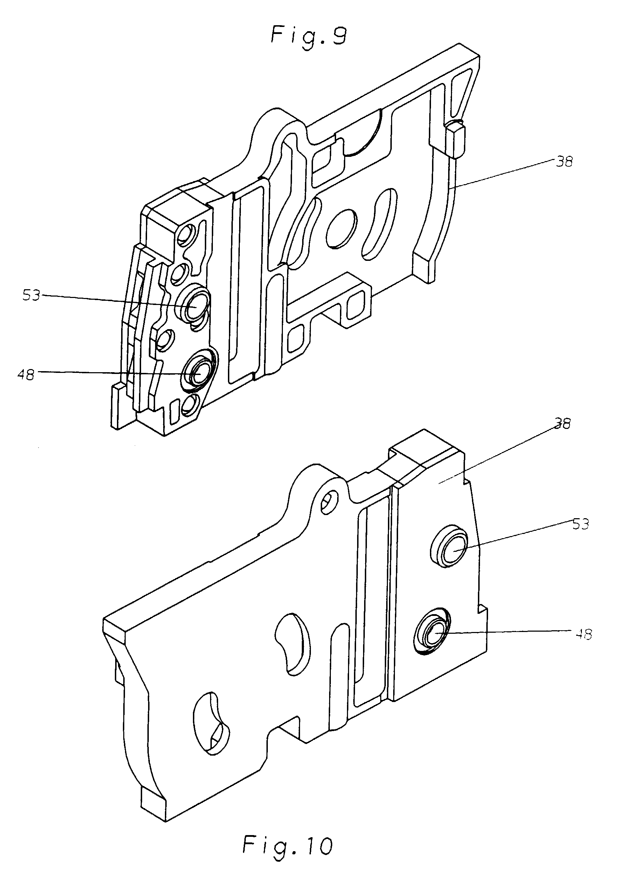

Les figures 9 et 10 sont des vues analogues aux figures 4 et 5 d'une entretoise sans détecteur de surpression.

La figure 11 est une vue en coupe suivant la ligne XI-XI de la figure 6 montrant les blocs unipolaires et les entretoises assemblés.

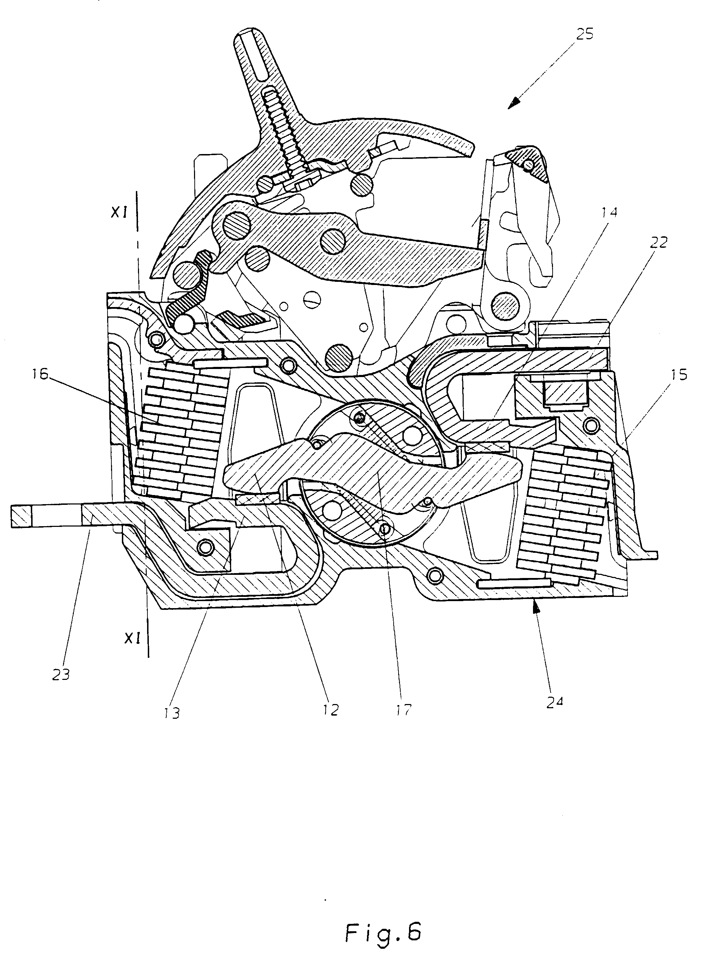

Sur les figures, un bloc unipolaire 10 de coupure comporte une boîte ou une ampoule 11 de forme générale parallélépipèdique, en matière plastique moulée, à l'intérieur de laquelle est monté en rotation, un pont de contacts 12, qui coopère avec une paire de contacts fixes 13,14. A chaque paire de contacts 12,13; 12,14 est associée une chambre de coupure 15,16, l'ensemble étant sensiblement symétrique par rapport à l'axe 17 de rotation du pont de contacts 12. L'axe 17 s'étend sensiblement au centre de la boîte 11 perpendiculairement aux deux grandes faces latérales 18,19 de la boîte 11. Sur les deux petites faces latérales 20,21 de la boîte 11 sont disposées des plages de contacts 22,23 respectivement raccordées aux contacts fixes 13,14. Dans la position fermée du pont de contacts 12, ce dernier s'étend sensiblement en parallèle du fond 24 de la boîte 11, et le courant entrant par exemple par la plage 22, parcourt les contacts 12,13,14 pour sortir par la plage opposée 23. Une rotation du pont de contacts 12 dans le sens des aiguilles d'une montre sur la figure 6, amène le pont de contacts 12 en position ouvert. Un bloc unipolaire 10 du genre mentionné est décrit dans le brevet français n°2.622.347 et on se reportera avantageusement à ce brevet pour de plus amples détails.

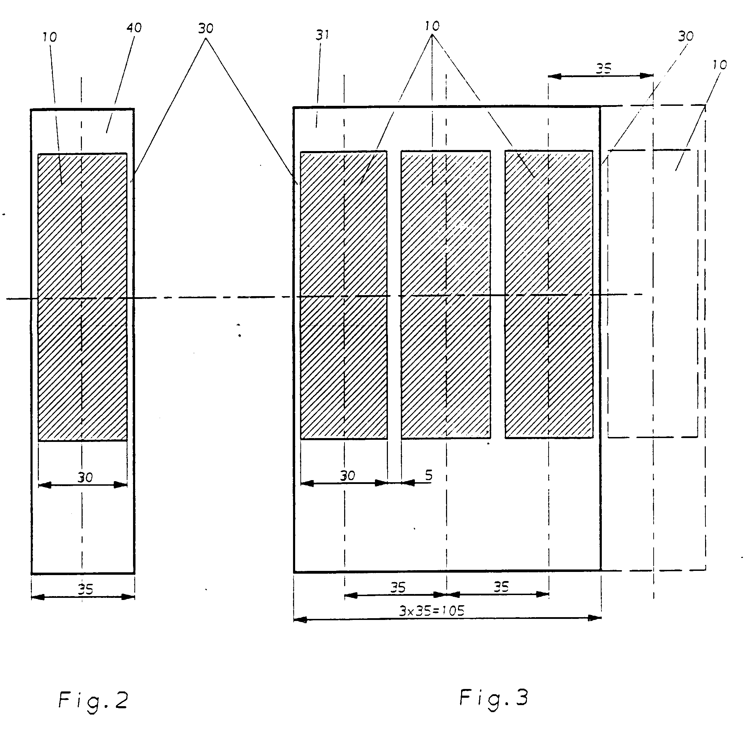

On peut réaliser un disjoncteur unipolaire basse tension de la gamme du disjoncteur multipolaire selon l'invention en associant au bloc unipolaire 10 un mécanisme 25, et en logeant l'ensemble bloc 10, mécanisme 25 dans un boîtier moulé 40, (figure 2). Un tel disjoncteur unipolaire ne forme pas l'objet de l'invention. Le mécanisme 25 est encadré par deux flasques métalliques 26 dont l'écartement correspond à la largeur du bloc unipolaire 10, auquel ces flasques 26 sont fixés par tout moyen approprié. Le mécanisme 25 d'un type standard à manette 27 et à genouillère 29 est disposé sur la face supérieure 28 du bloc unipolaire 10, et il est relié au pont de contacts mobile 12. Le bloc unipolaire 10 est logé sans jeu latéral dans le boîtier 40, et la largeur (par exemple de 30mm) du bloc 10 n'est augmentée que de l'épaisseur de la paroi latérale 30 du boîtier 40 pour atteindre par exemple 35mm. Il est facile de voir que lorsque plusieurs disjoncteurs unipolaires sont accolés les uns aux autres par leurs grandes faces latérales sur un panneau de distribution, le pas des bornes de raccordement est de 35mm, ce qui correspond à la distance standard des peignes ou barres d'alimentation.

Pour réaliser un disjoncteur multipolaire, on dispose plusieurs blocs unipolaires 10 dans un boîtier 31 de largeur appropriée. Sur la figure 3 est représenté un disjoncteur tripolaire, ayant trois blocs unipolaires 10 disposés parallèlement dans un boîtier 31 dont la largeur est trois fois celle du boîtier 40 du disjoncteur unipolaire. Les deux blocs unipolaires 10 d'extrémité sont accolés aux parois 30 du boîtier 31, tandis que le bloc central 10 est disposé au centre du boîtier 31. Cette disposition conserve le pas de raccordement, en l'occurrence de 35mm, et il subsiste entre le bloc unipolaire central et les deux blocs d'extrémités,un intervalle libre d'une épaisseur double à celle de la paroi 30,cette épaisseur double étant par exemple de 5mm. Il est clair que ces dimensions ne sont données qu'à titre d'exemple, et que selon les caractéristiques du disjoncteur, elles seront différentes, ainsi que le pas de raccordement et la modularité du système.

Sur la figure 3 est représenté en trait discontinu le contour d'un disjoncteur tétrapolaire ayant quatre blocs 10 logés dans un boîtier 31 dont la largeur est augmentée d'un pas pour atteindre par exemple 140mm. Un disjoncteur bipolaire ne comprendrait bien entendu que deux blocs unipolaires 10 écartés l'un de l'autre d'un intervalle de 5mm.

Les blocs unipolaires 10 peuvent être positionnés dans le boîtier 31 par tout moyen approprié, mais selon un mode de mise en oeuvre préférentiel de l'invention, des entretoises en forme de plaques 32,38 formant des cales d'écartement, sont interposées entre deux blocs unipolaires successifs 10. L'épaisseur de ces entretoises 32,38 correspond à celle de l'intervalle, en l'occurrence de 5mm entre les blocs 10. Les plaques entretoises 32,38 avantageusement en matière plastique moulée, présentent des rainures ou nervures 33 qui confinent des passages ou conduits 34 faisant communiquer le fond 24 des blocs 10 avec la partie supérieure 28. Dans les passages 34, sont logées les fileries auxiliaires ainsi que les leviers de commande, par exemple le levier de commande de prédéclenchement lors d'un débrochage du disjoncteur ou le levier de commande de contacts auxiliaires, disposés sur la face supérieure du bloc unipolaire 10. Les plaques entretoises 32,38 présentent également des lumières 35 de passage des tiges de liaison mécanique entre les ponts de contacts mobiles 12 des différents blocs unipolaires 10. Le mécanisme 25 est commun à l'ensemble des blocs unipolaires 10, et ce mécanisme est par exemple associé au pôle central, le mouvement étant transmis aux pôles d'extrémité 10 par des tiges transversales 36 d'accouplement des ponts de contacts mobiles 12. La plaque entretoise 32,38 peut présenter sur l'une ou sur ces deux faces, des pions de positionnement, qui s'emboîtent dans des orifices conjugués d'une grande face latérale adjacente des boîtes 11. Le mécanisme 25 peut être un mécanisme standard pour l'ensemble de la gamme de disjoncteurs, éventuellement renforcé par l'adjonction d'un mécanisme additionnel. Les différents blocs unipolaires 10 peuvent être solidarisés avant leur mise en place dans le boîtier 31, par exemple par des vis ou tirants 37, mais il est clair que ce positionnement peut également être réalisé par l'insertion dans le boîtier 31 qui présente des nervures de guidage et de positionnement des différents blocs unipolaires.

La fixation peut également être réalisée ou comporter des vis (non représentées) traversant des orifices ménagés dans le fond du boîtier 31 et se vissant dans les entretoises 32,38.

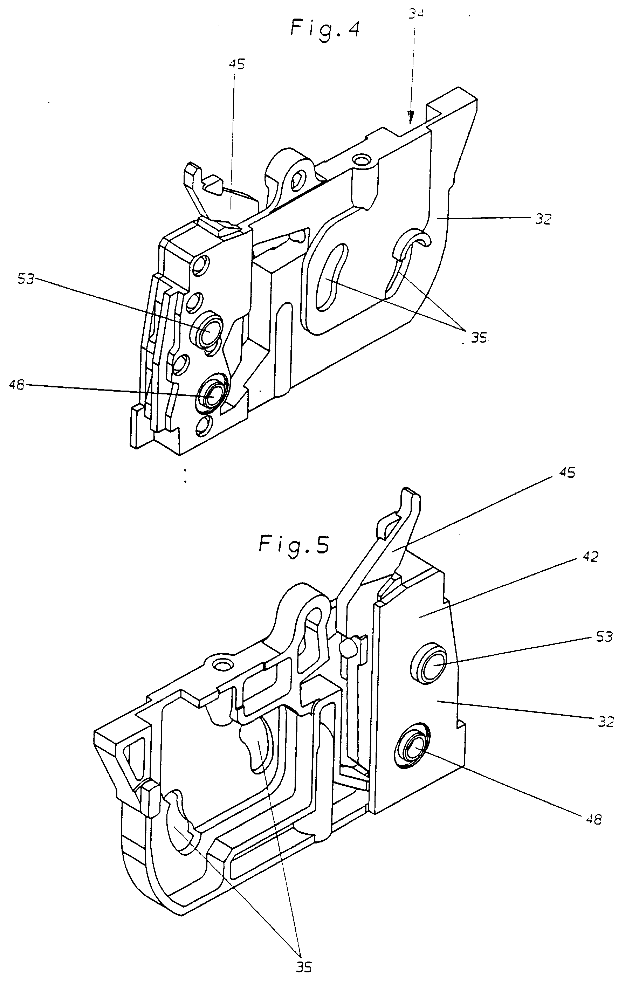

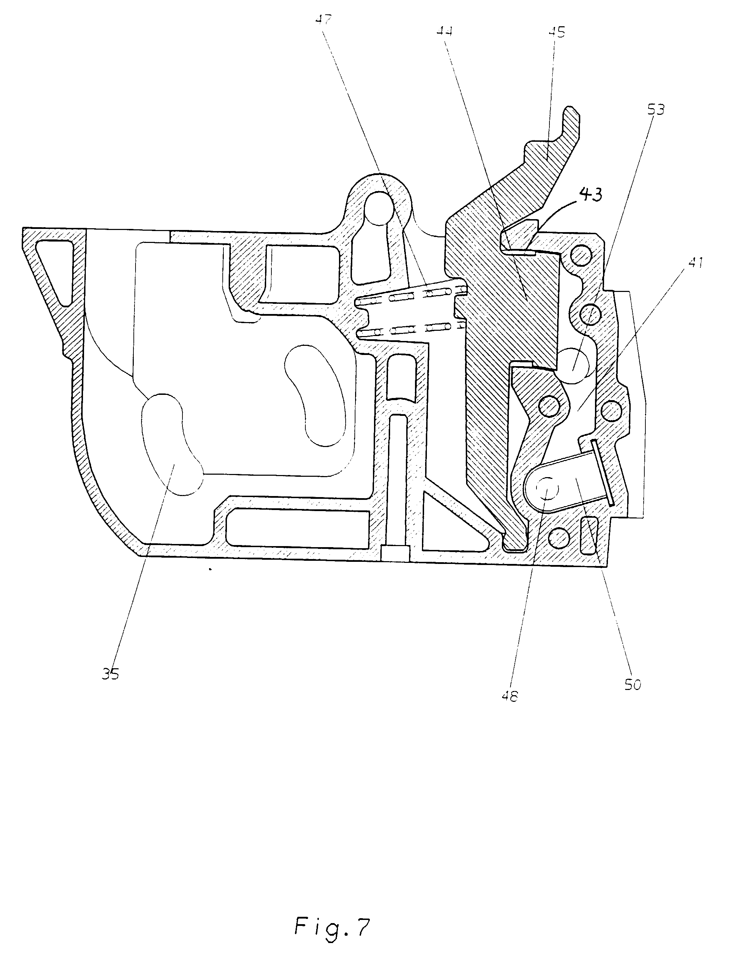

En se référant plus particulièrement aux figures 4,5 et 7, on voit qu'une entretoise 32 comporte une cavité 41 coiffée d'une manière étanche par un couvercle 42 et conformée partiellement en fourreau 43, dans lequel coulisse un piston 44. Le piston 44 porte un levier 45 qui fait saillie de la partie supérieure 28 des blocs 1 et qui coopère avec un accrochage 46 du mécanisme 25. Un ressort taré 47 sollicite le levier 45 en position dégagée représentée sur la figure 7. Lorsque la pression dans la cavité 41 dépasse un seuil prédéterminé, le piston 44 pousse le levier 45, à l'encontre de la force de ressort 47, vers la position de libération de l'accrochage 46 pour provoquer l'ouverture du disjoncteur.

La cavité 41 communique avec les boîtes 11 des blocs 10 adjacents par des orifices 48,49 conjugués, ménagés dans les parois latérales respectivement de la cavité 41 et des boîtes 11. Une surpression engendrée dans l'un des blocs unipolaires 10, adjacent à l'entretoise 32, équipé d'un actionneur à surpression 44,45, est transmise à la cavité 41 par les orifices 48,49 pour actionner le levier 45. Les orifices 48,49 sont pourvus de clapets anti-retour 50 empêchant tout reflux des gaz de la cavité 41 vers les blocs unipolaires 10.

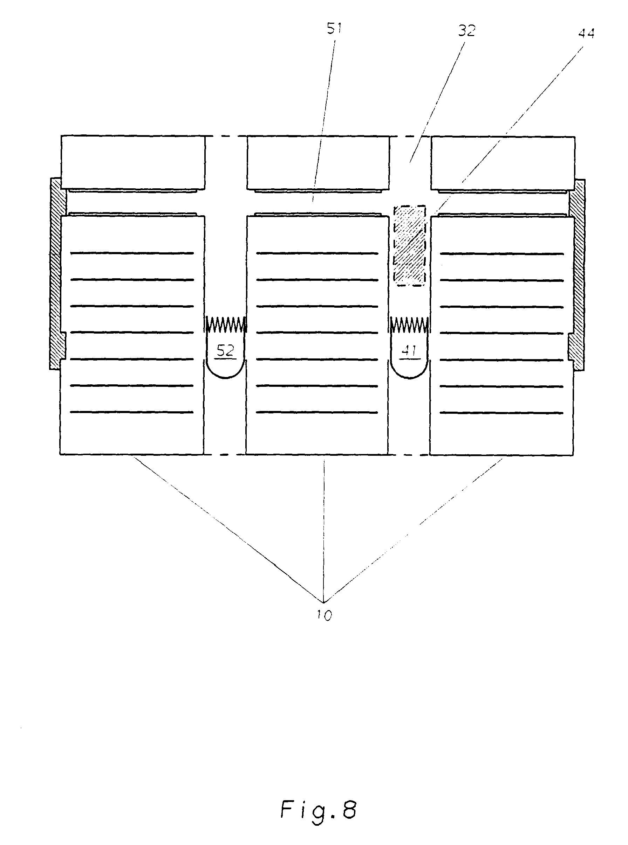

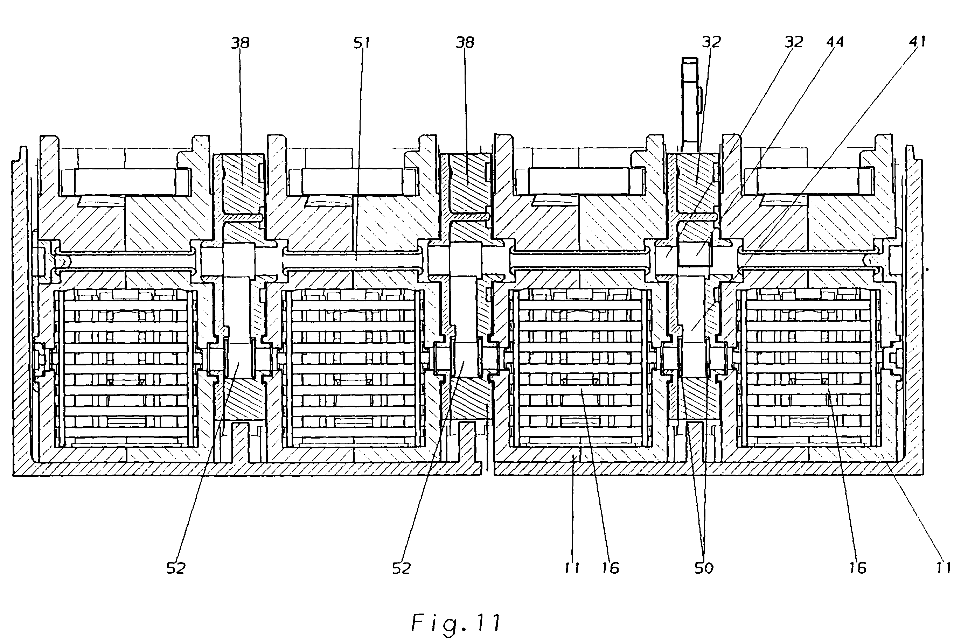

A chaque paire de blocs unipolaires 10 peut être associée une entretoise 32 à actionneur à surpression 44,45, intercalée entre les deux blocs 10, mais selon un mode de mise en oeuvre préférentiel représenté aux figures 8 et 11, l'actionneur 44,45 est commun à l'ensemble des blocs 10 du disjoncteur. La cavité 41 communique dans ce cas, d'une part avec les blocs 10 adjacents par les orifices 48,49 et d'autre part avec le ou les blocs unipolaires éloignés par des conduits 51. A cet effet, les entretoises 38, dépourvues d'actionneur à surpression, présentent une chambre 52, analogue à la cavité 41 des autres entretoises 32 qui communique avec les blocs unipolaires 10 adjacents par des orifices 48,49 pour collecter les surpressions engendrées dans ces blocs 10. Les chambres 52 des différentes entretoises 38 sont reliées à la cavité 41 par le conduit 51, formé par les rivets tubulaires d'assemblage des boîtes 11 des blocs 10 intercalés. Le conduit 51 est prolongé par un orifice 53 d'entrée dans la cavité 41. La liaison peut bien entendu être réalisée d'une manière différente et des clapets 50 évitent tout passage de gaz des conduits 51 vers les blocs 10.

Il est facile de voir qu'une surpression intervenant dans l'un quelconque des blocs unipolaires est transmise à la cavité 41 pour agir sur le piston 44 et actionner le déclenchement lorsque cette surpression dépasse un seuil prédéterminé. Le fonctionnement détaillé de cet actionneur est décrit dans le brevet précité.

Le boîtier 31 en deux parties assure une isolation complémentaire de celle des boîtes 11, et l'ensemble constitue un système modulaire à montage simplifié.

Le bloc de déclenchement (non représenté) du disjoncteur peut être incorporé au boîtier 31 ou éventuellement être accolé à l'extérieur de ce boîtier 31, d'une manière bien connue des spécialistes. Des blocs auxiliaires, notamment de commande ou de signalisation peuvent également être disposés dans le boîtier 31, ou être associés à ce dernier. A partir d'un bloc unipolaire standard 10, il est possible de réaliser toute une gamme de disjoncteurs ayant une modularité correspondant à celle du disjoncteur unipolaire. L'emploi d'un pont de contacts assure une double coupure et permet une diminution de l'encombrement total avec une disposition sensiblement symétrique.

L'invention est bien entendu nullement limitée au mode de mise en oeuvre plus particulièrement décrit, celle-ci s'étendant aux variantes de réalisation qui ne sortent pas du cadre de l'invention telle que revendiquée, notamment celles dans laquelle les plaques entretoises 32 seraient remplacées par de simples cales, ou celles encore dans laquelle la commande des ponts de contacts serait réalisée d'une manière différente.

## Revendications

1. Disjoncteur basse tension à double enveloppe et à plusieurs pôles, réalisé à partir de blocs (10) unipolaires standard de coupure logés dans un boîtier moulé (31) commun et dans laquelle chaque bloc unipolaire (10) comprend une boîte (11) parallélépipèdique isolante ayant deux grandes faces (18,19) latérales parallèles opposées et deux petites faces (20,21) parallèles opposées et contenant un contact mobile (12), monté à pivotement sur un axe (17) perpendiculaire auxdites grandes faces, et susceptible de coopérer avec un contact (13,14) fixe, adjacent à une petite face, laquelle porte une borne (22,23) reliée au contact fixe associé (13,14), plusieurs blocs unipolaires (10) étant disposés parallèlement dans le boîtier (31) selon leurs grandes faces latérales, ledit contact mobile étant agencé en pont de contacts (12) coopérant avec deux contacts fixes (13,14), chacun respectivement adjacent à l'une desdites petites faces (20,21), pour engendrer une double coupure dans deux chambres de coupure (15,16) du bloc unipolaire (10), un mécanisme à manette de commande (25) étant commun a l'ensemble des blocs unipolaires,
caractérisé en ce que les blocs unipolaires sont espacés d'un intervalle (32) double de l'épaisseur de la paroi (30) du boîtier (31), que les deux blocs d'extrémité sont accolés aux parois (30) du boîtier (31) par leurs grandes faces latérales d'extrémité (18), de façon à conserver la modularité définie par le disjoncteur unipolaire (26), et que les blocs unipolaires (10) sont solidarisés les uns aux autres avec interposition d'entretoises (32,38) ou de cales d'écartement qui définissent ledit intervalle entre les blocs adjacents (10).

2. Disjoncteur selon la revendication 1, caractérisé en ce que la modularité en largeur des boîtiers (31) est de 35mm, la largeur des boîtiers des différents disjoncteurs de la gamme étant un multiple de 35mm, et que lesdites bornes (22,23) sont au pas de 35mm.

3. Disjoncteur selon la revendication 1, caractérisé en ce que lesdites entretoises (32,38) en forme de plaque présentent des rainures (34) ou des conduits pour le passage de leviers de commande et/ou de fileries auxiliaires s'étendant entre le fond (24) et la face avant de la boîte (11).

4. Disjoncteur selon la revendication 3, caractérisé en ce que lesdites entretoises (32) présentent des pions (37) de positionnement s'emboîtant dans des trous correspondants, ménagés dans les grandes faces latérales (19) des boîtes (11) pour positionner les boîtes les unes par rapport aux autres.

5. Disjoncteur selon la revendication 1, caractérisé en ce qu'une entretoise (32) comporte une cavité (41) communiquant par un orifice (48) avec la boîte (11) d'un bloc unipolaire (10) adjacent et qu'un actionneur (44,45) réagissant à une surpression règnant dans ladite cavité (41) commande le mécanisme (25) pour déclencher le disjoncteur lorsque la surpression dépasse un seuil prédéterminé.

6. Disjoncteur selon la revendication 5, caractérisé en ce que ledit actionneur comporte un piston (44) monté à coulissement dans un cylindre associé à ladite cavité (41).

7. Disjoncteur selon la revendication 5 ou 6, caractérisé en ce que des conduits (51) constitués par des rivets d'assemblage tubulaires font communiquer la cavité (41) avec les boîtes (11) des blocs unipolaires non adjacents.

8. Disjoncteur selon la revendication 1, caractérisé en ce que ledit mécanisme (25) de commande est un mécanisme (25) de commande à genouillère (29) logé dans ledit boîtier (31) au dessus de l'un des blocs unipolaires (10), que le mécanisme est encadré par deux flasques métalliques (26) parallèles aux deux grandes faces (18,19) latérales du bloc unipolaire associé (10) et que lesdits flasques (26) dont l'écartement correspond à la largeur du bloc (10) sont rigidement solidarisés à ce bloc unipolaire (10).

9. Disjoncteur selon la revendication 8, caractérisé en ce que les ponts de contacts (13) des différents blocs unipolaires (10) du disjoncteur sont accouplés en rotation et au mécanisme de commande (25) commun à l'ensemble des blocs unipolaires (10).

## Patentansprüche

1. Niederspannungs-Leistungsschalter mit Doppelgehäuse und mehreren Polen, der aus, in einem gemeinsamen Isolierstoffgehäuse (31) angeordneten, einpoligen Standard-Abschaltblöcken (10) gebildet ist und bei dem jeder Einzelpolblock (10) einen quaderförmigen Isolierstoffkasten (11) mit zwei parallelen, einander gegenüberliegenden großen Seitenflächen (18, 19) sowie zwei parallelen, einander gegenüberliegenden kleinen Seitenflächen (20, 21) umfaßt und einen beweglichen Kontakt (12) enthält, der auf einer, rechtwinklig zu den genannten großen Seitenflächen angeordneten Achse (17) schwenkbar gelagert ist und dazu dient, mit einem feststehenden Kontakt (13, 14) zusammenzuwirken, welcher an eine kleine Seitenfläche angrenzt, die eine, mit dem zugeordneten feststehenden Kontakt (13, 14) verbundene Klemme (22, 23) trägt, wobei mehrere Einzelpolblöcke (10) mit ihren großen Seitenflächen parallel zueinander im Gehäuse (31) angeordnet sind, der genannte bewegliche Kontakt als Kontaktbrücke (12) ausgebildet ist, die mit zwei, jeweils an eine der genannten kleinen Seitenflächen (20, 21) angrenzenden, feststehenden Kontakten (13, 14) zusammenwirkt, um eine zweifache Abschaltung in zwei Löschkammern (15, 16) des Einzelpolblocks (10) zu bewirken, und ein Mechanismus mit Schaltknebel (25) sämtlichen Einzelpolblöcken gemeinsam zugeordnet ist,
dadurch gekennzeichnet, daß die Einzelpolblöcke in einem, der doppelten Dicke der Wand (30) des Gehäuses (31) entsprechenden Abstand (32) voneinander angeordnet sind, daß die beiden Außenblöcke mit ihren großen äußeren Seitenflächen (18) an die Wände (30) des Gehäuses (31) angrenzen, derart daß die durch den einpoligen Leistungsschalter (26) bestimmte Teilung aufrechterhalten bleibt und daß die Einzelpolblöcke (10) über zwischengefügte, den genannten Abstand zwischen den aneinandergrenzenden Blöcken (10) bestimmende Abstandshalter (32, 38) oder Trennstege miteinander verbunden sind.

2. Leistungsschalter nach Anspruch 1, dadurch gekennzeichnet, daß die Breitenteilung der Gehäuse (31) 35 mm beträgt, so daß die Breite der Gehäuse der verschiedenen Leistungsschalter der Schalterreihe ein Vielfaches von 35 mm darstellt, und daß die genannten Klemmen (22, 23) ein Rastermaß von 35 mm aufweisen.

3. Leistungsschalter nach Anspruch 1, dadurch gekennzeichnet, daß die genannten plattenförmigen Abstandshalter (32, 38) Nuten (34) oder Führungskanäle zur Hindurchführung von Betätigungshebeln und/oder Hilfsverdrahtungen aufweisen, die zwischen dem Boden (24) und der Vorderseite des Kastens (11) verlaufen.

4. Leistungsschalter nach Anspruch 3, dadurch gekennzeichnet, daß die genannten Abstandshalter (32) Positionierstifte (37) aufweisen, die in zugehörige Öffnungen der großen Seitenflächen (19) der Kästen (11) eingreifen, um die Kästen relativ zueinander zu positionieren.

5. Leistungsschalter nach Anspruch 1, dadurch gekennzeichnet, daß ein Abstandshalter (32) einen Hohlraum (41) aufweist, der über eine Öffnung (48) mit dem Kasten (11) eines angrenzenden Einzelpolblocks (10) verbunden ist, und daß ein, auf einen im genannten Hohlraum (41) auftretenden Überdruck ansprechendes Wirkglied (44, 45) den Mechanismus (25) betätigt, um den Leistungsschalter auszulösen, wenn der Überdruck einen bestimmten Schwellwert überschreitet.

6. Leistungsschalter nach Anspruch 5 oder 6, dadurch gekennzeichnet, daß das genannte Wirkglied einen Kolben (44) umfaßt, der gleitend in einem, dem genannten Hohlraum (41) zugeordneten Zylinder gelagert ist.

7. Leistungsschalter nach Anspruch 5, dadurch gekennzeichnet, daß durch Verbindungs-Rohrniete gebildete Führungskanäle (51) den Hohlraum (41) mit den Kästen (11) der nicht aneinandergrenzenden Einzelpolblöcke verbinden.

8. Leistungsschalter nach Anspruch 1, dadurch gekennzeichnet, daß der genannte Antriebsmechanismus (25) als Antriebsmechanismus (25) mit Kniehebelgelenk (29) ausgebildet ist, der über einem der Einzelpolblöcke (10) im genannten Gehäuse (31) angeordnet ist, daß der Mechanismus von zwei, parallel zu den großen Seitenflächen (18, 19) des zugeordneten Einzelpolblocks (10) angeordneten Seitenblechen (26) umschlossen ist und daß die genannten Seitenbleche (26), deren Abstand der Breite des Blocks (10) entspricht, biegesteifmit diesem Einzelpolblock (10) verbunden sind.

9. Leistungsschalter nach Anspruch 8, dadurch gekennzeichnet, daß die Kontaktbrücken (13) der verschiedenen Einzelpolblöcke (10) des Leistungsschalters drehwirksam miteinander verbunden sowie an den, sämtlichen Einzelpolblöcken (10) gemeinsam zugeordneten Antriebsmechanismus (25) angekoppelt sind.

## Claims

1. A low voltage circuit breaker with double housing and several poles, made up from standard single-pole breaking units (10) housed in a common moulded case (31) and wherein each single-pole unit (10) comprises a parallelepipedic insulating box (11) having two opposite parallel large side faces (18, 19) and two opposite parallel small side faces (20, 21) and containing a movable contact (12), pivotally mounted on an axis (17) perpendicular to said large faces, and designed to cooperate with a stationary contact (13, 14), adjacent to a small face which bears a terminal (22, 23) connected to the associated stationary contact (13, 14), several single-pole units (10) being arranged in parallel in the case (31) according to their large side faces, said movable contact being arranged as a contact bridge (12) cooperating with two stationary contacts (13, 14), each respectively adjacent to one of said small faces (20, 21), to bring about double breaking in two extinguishing chambers (15, 16) of the single-pole unit (10), a mechanism with an operating handle (25) being common to all the single-pole units (10)
characterized in that the single-pole units are separated by a gap (32) twice the thickness of the wall (30) of the case (31), that the two end units are adjoined to the walls (30) of the case (31) by means of their large end side faces (18), so as to preserve the modularity defined by the single-pole circuit breaker (26), and that the single-pole units (10) are securedly united to one another with interposition of spacers (32, 38) or shims which define said gap between the adjacent units (10).

2. The circuit breaker according to claim 1, characterized in that the widthwise modularity of the cases (31) is 35mm, the width of the cases of the different circuit breakers in the range being a multiple of 35mm, and that said terminals (22, 23) are at a pitch of 35mm.

3. The circuit breaker according to claim 1, characterized in that said spacers (32, 38) in the form of plates present grooves (34) or ducts for the passage of control levers and/or auxiliary wiring extending between the back-plate (24) and the front face of the box (11).

4. The circuit breaker according to claim 3, characterized in that said spacers (32) have positioning pins (37) engaging in corresponding holes, arranged in the large side faces (19) of the boxes (11) to position the boxes with respect to one another.

5. The circuit breaker according to claim 1, characterized in that a spacer (32) comprises a cavity (41) communicating via an orifice (48) with the box (11) of an adjacent single-pole unit (10) and that an actuator (44, 45) reacting to an overpressure present in said cavity (41) controls the mechanism (25) to trip the circuit breaker when the overpressure exceeds a preset threshold.

6. The circuit breaker according to claim 5, characterized in that said actuator comprises a piston (44) slidingly mounted in a cylinder associated to said cavity (41).

7. The circuit breaker according to claim 5 or 6, characterized in that the ducts (51) formed by tubular assembly rivets provide the communication between the cavity (41) and the boxes (11) of the non-adjacent single-pole units.

8. The circuit breaker according to claim 1, characterized in that said operating mechanism (25) is an operating mechanism (25) with a toggle (29) housed in said case (31) above one of the single-pole units (10), that the mechanism is framed by two metal flanges (26) parallel to the two large side faces (18, 19) of the associated single-pole unit (10) and that said flanges (26) the distance between which corresponds to the width of the unit (10) are fixedly secured to this single-pole unit (10).

9. The circuit breaker according to claim 8, characterized in that the contact bridges (13) of the different single-pole units (10) of the circuit breaker are coupled in rotation and to the operating mechanism (25) common to all the single-pole units (10).
